# EUROPEAN PATENT APPLICATION

(11) **EP 4 583 385 A1**
(43) Date of publication of application: **09.07.2025**
(21) Application number: 25150442.9
(22) Date of filing: 07.01.2025
(51) Int. Cl.: H02M 1/00, H02M 1/32, H02M 1/36, H02M 3/158

(54) **BIDIRECTIONAL DC/DC CONVERTER, ENERGY STORAGE DEVICE AND CONTROL METHOD THEREOF**

(30) Priority: 08.01.2024 CN 202410027369
(71) Applicant: Delta Electronics (Shanghai) Co., Ltd., Shanghai 201209 (CN)
(72) Inventor: WANG, Yafeng, Shanghai, 201209 (CN); WU, Haoyu, Shanghai, 201209 (CN); ZHANG, Tengshen, Shanghai, 201209 (CN); ZHONG, Linfeng, Shanghai, 201209 (CN); WANG, Changyong, Shanghai, 201209 (CN)
(74) Representative: SSM Sandmair

(57) **Abstract**

The invention provides a bidirectional DC/DC converter, including: a low-voltage port (PortB) having a first voltage; a high-voltage port; a start circuit (A₁) having one end electrically connected to the low-voltage port (PortB); an inductor (L₁) having one end electrically connected to the other end of the start circuit (A₁); and a switch circuit (A₂) having both ends electrically connected to the high-voltage port and the other end of the inductor (L₁), respectively. The start circuit (A₁) includes at least one controllable switch. When starting from the low-voltage port (PortB), a voltage of the high-voltage port is established using the first voltage, by controlling the at least one controllable switch. The bidirectional DC/DC converter has a self-start capability, and the voltage soft start way is flexibly controllable.

## Description

### BACKGROUND OF THE INVENTION

### 1. Field of the Invention

The invention relates to the technical field of black start of the circuit, and particularly to a bidirectional DC/DC converter, an energy storage device and a control method thereof.

### 2. Related Art

Self-recovery of the system after power failure of the grid at a large area is generally referred to black start. When the system is all power failure, the entire system is shut down due to fault and is in a full "black" state. When the system needs to start, the equipment having self-start capability in the system firstly start, and then drive operation of the equipment having no self-start capability, thereby gradually expanding a recovery range of the system. And finally achieve recovery of the entire system without assistance of other devices.

In an energy storage system where batteries are directly connected to a power control system (PCS), the black start function is implemented by a black start mode of the PCS. However, in order to optimize performance of the batteries, improve service life of the batteries and enhance adaptability of connecting different batches and different types of batteries, single cluster charge and discharge management on the batteries shall be made, so the energy storage system shall add a DC/DC module at a battery side.

There are two structures to add the DC/DC module at the battery side. The first structure is that a part of batteries in the system are configured with the DC/DC modules and the other part of batteries are directly connected to the DC bus. When black starting, the DC bus voltage is supplied using a direct-mounted battery, then the DC/DC module is started to control the DC bus voltage, and next black start of the system is completed through the PCS.

The second structure is that all batteries in the system are configured with the DC/DC modules. When black starting, a self-start DC load equipment is disconnected firstly, then the DC bus capacitor is precharged via antiparallel diodes of the DC/DC module and a precharging resistor R, next the DC/DC module is started to control the DC bus voltage, and black start of the system is completed using the PCS after the DC Load is connected. Since the existing DC/DC module itself does not have black start capability, the second structure shall perform the black start operation from a system level, additional large power precharging resistors and high-voltage DC contactors are added, and complexity of the control logic is increased.

In conclusion, the existing DC converter has more issues when black starting, so it is necessary to make improvement.

### SUMMARY OF THE INVENTION

With respect to the deficiencies, an object of the invention is to provide a bidirectional DC/DC converter having self-start capability and a flexible voltage soft start way, thereby optimizing system hardware topology of the energy storage device.

In order to achieve the object, the invention provides a bidirectional DC/DC converter. The bidirectional DC/DC converter includes a low-voltage port having a first voltage, a high-voltage port, a start circuit having one end electrically connected to the low-voltage port, an inductor having one end electrically connected to the other end of the start circuit, and a switch circuit having both ends electrically connected to the high-voltage port and the other end of the inductor, respectively. The start circuit includes at least one controllable switch. When the bidirectional DC/DC converter starts from the low-voltage port, a voltage of the high-voltage port is established using the first voltage, by controlling the at least one controllable switch.

Alternatively, the bidirectional DC/DC converter further includes a first capacitor connected in parallel to the high-voltage port, and a second capacitor connected in parallel to the low-voltage port, wherein the start circuit is electrically connected between the first capacitor and the inductor.

Alternatively, when the bidirectional DC/DC converter starts from the low-voltage port, the voltage of the high-voltage port increases from zero to the first voltage, and a slope of voltage change is controlled based on a duty ratio of the at least one controllable switch.

Alternatively, the duty ratio of the at least one controllable switch is controlled to gradually increase, thereby gradually increasing the voltage of the high-voltage port to the first voltage.

Alternatively, when the bidirectional DC/DC converter starts from the low-voltage port, the bidirectional DC/DC converter enters a first working stage. At the first working stage, the start circuit and the inductor perform buck conversion on the first voltage to obtain the voltage of the high-voltage port, and the switch circuit works in a constant conduction mode to provide current paths between the high-voltage port and the power conversion circuit.

Alternatively, the bidirectional DC/DC converter enters a second working stage when the first working stage ends. At the second working stage, the switch circuit and the inductor perform boost conversion on the first voltage to obtain the voltage of the high-voltage port; and the start circuit works in the constant conduction mode to provide current paths between the low-voltage port and the second power conversion circuit.

Alternatively, at the first working stage, the voltage of the high-voltage port is increased from 0 to the first voltage; and at the second working stage, the voltage of the high-voltage port is increased from the first voltage to a target voltage.

Alternatively, the start circuit includes a main switching tube electrically connected between a first end of the low-voltage port and the inductor, and an auxiliary switching tube having one end electrically connected to a connection point of the main switching tube and the inductor, and the other end electrically connected to a second end of the low-voltage port.

Alternatively, the start circuit further includes a short-circuit switch electrically connected in parallel to the main switching tube. When the main switching tube is conducted constantly, the short-circuit switch is closed.

Alternatively, at the first working stage, a duty ratio of the main switching tube is controlled to gradually increase and the voltage of the high-voltage port is gradually established to the first voltage; and at the second working stage, the main switching tube is controlled to conduct constantly.

Alternatively, the switch circuit is a first flying capacitor switch circuit, and includes a first switching tube, a second switching tube, a third switching tube, a fourth switching tube, and a first flying capacitor. The first switching tube, the second switching tube, the third switching tube and the fourth switching tube are connected in series. The first flying capacitor has one end electrically connected between the first switching tube and the second switching tube, and the other end electrically connected between the third switching tube and the fourth switching tube. And a first end of the first switching tube and a second end of the fourth switching tube are connected in parallel to the high-voltage port.

Alternatively, the first voltage is greater than or equal to one half of the target voltage. At the first working stage, the second switching tube and the fourth switching tube are conducted to charge the first flying capacitor, and the second switching tube and the fourth switching tube are turned off when a voltage of the first flying capacitor is equal to one half of the target voltage.

Alternatively, the first voltage is less than one half of the target voltage. At the first working stage, the second switching tube and the fourth switching tube are conducted constantly to charge the first flying capacitor.

Alternatively, the start circuit is a second flying capacitor switch circuit, and includes a fifth switching tube, a sixth switching tube, a seventh switching tube, an eighth switching tube, a first resistor, a second resistor, a third resistor, a fourth resistor and a second flying capacitor. The fifth switching tube, the sixth switching tube, the seventh switching tube and the eighth switching tube are sequentially connected in series. A first end of the fifth switching tube is electrically connected to a first end of the low-voltage port, and a second end of the eighth switching tube is electrically connected to a second end of the low-voltage port. A second end of the sixth switching tube is electrically connected to the inductor. The second flying capacitor is electrically connected between a first end of the sixth switching tube and a second end of the seventh switching tube. The first resistor, the second resistor, the third resistor and the fourth resistor are sequentially connected in series, the first resistor is connected in parallel to the fifth switching tube, a first end of the second resistor and a second end of the third resistor are connected in parallel to the second flying capacitor, and the fourth resistor is connected in parallel to the eighth switching tube.

Alternatively, at the first working stage, pulse widths of switching signals of the fifth switching tube and the sixth switching tube are controlled to gradually increase, and pulse widths of switching signals of the seventh switching tube and the eighth switching tube are controlled to gradually decrease. And at the second working stage, the fifth switching tube and the sixth switching tube are conducted constantly, and the seventh switching tube and the eighth switching tube are off.

The invention further provides an energy storage device. The energy storage device includes a power condition system, a DC bus electrically connected to a DC side of the power condition system, multiple energy storage units, each electrically connected to the DC bus through a bidirectional DC/DC converter. At least one bidirectional DC/DC converter includes a low-voltage port having a first voltage supplied by a corresponding energy storage unit; [a high-voltage port electrically connected to the DC bus; a start circuit having one end electrically connected to the low-voltage port, wherein the start circuit includes at least one controllable switch; an inductor having one end electrically connected to the other end of the start circuit; and a switch circuit having both ends electrically connected to the high-voltage port and the other end of the inductor, respectively. When the at least one bidirectional DC/DC converter starts from the low-voltage port, a voltage of the high-voltage port is established using the first voltage, by controlling the at least one controllable switch.

Alternatively, the energy storage device is electrically connected to a power supply system, and when the power supply system loses power, the energy storage units output power to the at least one bidirectional DC/DC converter and establish a bus voltage through the at least one bidirectional DC/DC converter.

Alternatively, when the bidirectional DC/DC converter starts from the low-voltage port, the voltage of the high-voltage port increases from zero to the first voltage, and a slope of voltage change is controlled based on a duty ratio of the at least one controllable switch.

Alternatively, when the at least one bidirectional DC/DC converter starts from the low-voltage port, the start circuit and the inductor perform buck conversion on the first voltage and establish the voltage of the high-voltage port to the first voltage; and the switch circuit and the inductor perform boost conversion on the first voltage and establish the voltage of the high-voltage port from the first voltage to the second voltage.

Alternatively, when the start circuit and the inductor perform buck conversion, the switch circuit works in a constant conduction mode to provide current paths between the high-voltage port and the start circuit; and when the switch circuit and the inductor perform boost conversion, the start circuit works in the constant conduction mode to provide current paths between the low-voltage port and the switch circuit.

The invention further provides a method of controlling a bidirectional DC/DC converter. The bidirectional DC/DC converter includes a low-voltage port having a first voltage; a high-voltage port; a start circuit having one end electrically connected to the low-voltage port; an inductor having one end electrically connected to the other end of the start circuit; and a switch circuit having both ends electrically connected to the high-voltage port and the other end of the inductor, respectively. When the bidirectional DC/DC converter starts from the low-voltage port, the control method includes:
performing buck conversion on the first voltage through the start circuit and the inductor to establish the voltage of the high-voltage port to the first voltage; and
performing boost conversion on the first voltage through the switch circuit and the inductor to establish the voltage of the high-voltage port from the first voltage to a target voltage.

### BRIEF DESCRIPTION OF THE DRAWINGS

FIG. 1a is a structural diagram of the bidirectional DC/DC converter in the first embodiment of the disclosure.
FIG. 1b is a structural diagram of the bidirectional DC/DC converter in the second embodiment of the disclosure.
FIG. 1c is a structural diagram of the bidirectional DC/DC converter in the third embodiment of the disclosure.
FIG. 2a is a schematic circuit diagram of the bidirectional DC/DC converter in FIG. 1b.
FIG. 2b is a schematic circuit diagram of the bidirectional DC/DC converter in FIG. 1a.
FIG. 3 is a schematic circuit diagram of the bidirectional DC/DC converter in FIG. 1c.
FIG. 4 is a block diagram of the energy storage device in one embodiment of the invention.
FIG. 5 is a schematic diagram of pulse signals of switching tubes in the bidirectional DC/DC converter of FIG. 3.
FIG. 6 is a schematic diagram of current loops of the bidirectional DC/DC converter of FIG. 3.
FIG. 7 is a schematic diagram of current loops of the bidirectional DC/DC converter of FIG. 3.
FIG. 8 is a schematic diagram of another current loop of the bidirectional DC/DC converter of FIG. 3.
FIG. 9 is a schematic diagram of another current loop of the bidirectional DC/DC converter of FIG. 3.
FIG. 10 is a schematic diagram of another current loop of the bidirectional DC/DC converter of FIG. 3.
FIG. 11 is a schematic diagram of another current loop of the bidirectional DC/DC converter of FIG. 3.
FIG. 12 is a schematic diagram of another current loop of the bidirectional DC/DC converter of FIG. 3.
FIG. 13 is a schematic diagram of another current loop of the bidirectional DC/DC converter of FIG. 3.
FIG. 14 is a schematic diagram of pulse signals of switching tubes in the bidirectional DC/DC converter of FIG. 3.
FIG. 15 is a schematic diagram of the bidirectional DC/DC converter in any embodiments of the FIGS.1a to 1c.
FIG. 16 is a schematic diagram of the bidirectional DC/DC converter in any embodiments of the FIGS.1a to 1c.
FIG. 17 is a schematic diagram of the bidirectional DC/DC converter in any embodiments of the FIGS.1a to 1c.
FIG. 18 is a schematic diagram of the bidirectional DC/DC converter in any embodiments of the FIGS.1a to 1c.
FIG. 19 is a schematic diagram of the bidirectional DC/DC converter in any embodiments of the FIGS.1a to 1c.
FIG. 20 is a schematic circuit diagram of the bidirectional DC/DC converter in FIG. 1c.
FIG. 21 is a schematic diagram of pulse signals of switching tubes in the bidirectional DC/DC converter of FIG. 20.
FIG. 22 is a schematic diagram of current loops of the bidirectional DC/DC converter of FIG. 20.
FIG. 23 is a schematic diagram of current loops of the bidirectional DC/DC converter of FIG. 20.
FIG. 24 is a schematic diagram of current loops of the bidirectional DC/DC converter of FIG. 20.
FIG. 25 is a schematic diagram of current loops of the bidirectional DC/DC converter of FIG. 20.
FIG. 26 is a schematic diagram of another current loop of the bidirectional DC/DC converter of FIG. 20.
FIG. 27 is a schematic diagram of another current loop of the bidirectional DC/DC converter of FIG. 20.
FIG. 28 is a schematic diagram of still another current loop of the bidirectional DC/DC converter of FIG. 20.
FIG. 29 is a schematic diagram of even another current loop of the bidirectional DC/DC converter of FIG. 20.

### DETAILED EMBODIMENTS OF THE INVENTION

To make the object, technical solution and advantage of the invention clearer, hereinafter the invention is further explained in details with reference to the accompanying drawings and the embodiments. It shall be understood that the described specific embodiments are only to explain the invention, but not limited to the invention.

It shall be noted that references of "one embodiment", "embodiments" and "exemplary embodiments" in the specification refer to that the described embodiment may include specific features, structures or properties, but it is not that every embodiment must include these specific features, structures or properties. Moreover, such expression does not refer to the same embodiment. Further, when the specific features, structures or properties are described with reference to the embodiments, regardless of clear description, it has indicated that such feature, structure or property combined in other embodiments is within the knowledge range of those skilled in the art.

Moreover, the specification and subsequent claims use some phrases to refer to specific components or members, and those ordinary in the art shall understand that manufacturers may name the same component or member using different nouns or terms. The specification and subsequent claims do not use the difference of names as the way of distinguishing the component or member, but using the difference of functions of the component or member as the distinguishing criterion. "comprise" and "include" mentioned in the whole specification and subsequent claims are open words, so they shall be understood to be "include but not limited to". Moreover, the word "connection" includes any direct or indirect electrical connection means. Indirect electrical connection means includes connecting through other devices.

The intermittent power generation features of clean energy bring a certain challenge to safe and stable operation of the grid. Energy storage technology serves as an effective measure to suppress power fluctuation of the grid and enhance quality of electric energy, and is applied to power generation system of the clean energy.

The energy storage system is connected to the grid, and takes the common DC bus as an energy transfer carrier. The constant control of the DC bus voltage decides operation modes of the devices in the energy storage system. As a core device of energy conversion of the energy storage system, the bidirectional DC/DC converter adjusts flow of energy between the DC bus and the battery unit to realize stabilizing balanced control of the bus voltage and the battery according to a voltage value.

In the system, the bidirectional DC/DC converter has various working modes, works in a buck mode, and can also work in a boost mode to satisfy a wide variation range of a voltage of the battery unit and the DC bus voltage. To improve energy conversion efficiency, a non-isolated topology is often used, such as a two-level topology, a three-level topology and a cascaded multi-level topology. When the system black starts, the DC bus shall begin to establish the bus voltage from 0V through the bidirectional DC/DC converter. However, due to existence of a mF-level capacitive load, some devices that detect the bus voltage and self-start on the DC bus, and the inherent antiparallel diodes in the topologies, an uncontrollable energy flow path exists from the battery side to a DC bus side. When a voltage at the bus side is lower than a voltage at the battery side, a current of the flow path shall be controlled, thereby ensuring to suppress a surge current on the premise of establishing the voltage, and protecting the switching tubes from not being damaged. When a self-start DC load equipment is connected on the DC bus, it will start when the bus reaches a threshold voltage, thereby lowering the DC bus voltage. If the DC load requires a large power, the precharge circuit cannot control the voltage of the high-voltage port to reach a target value. Therefore, a capacitance of the capacitive load, the consumed power of the self-start device, and the like bring a strong coupling constraint design to selection of a power and a resistance of a resistor in the precharge circuit. So the precharge resistance and power shall be adjusted and adapted according to configurations of the system. In conclusion, the resistor precharge circuit has limits and couplings from multiple aspects. After the energy storage system adds the bidirectional DC/DC converter module, usability of the system is reduced, and additional control means shall be added.

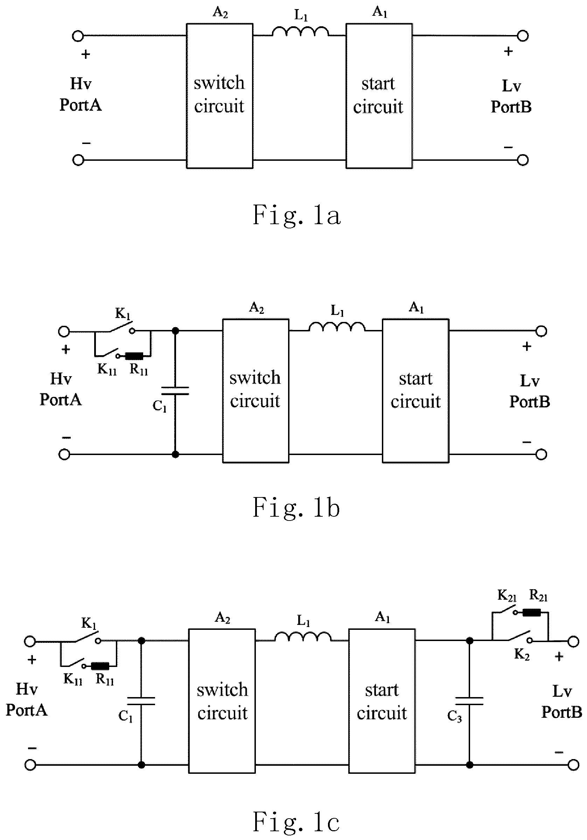

The invention provides an improved bidirectional DC/DC converter. FIG. 1a is a structural diagram of the bidirectional DC/DC converter in the first embodiment of the disclosure. As shown in FIG. 1a, the bidirectional DC/DC converter includes a low-voltage port PortB, a high-voltage port PortA, a start circuit A₁, an inductor L₁ and a switch circuit A₂. Hereinafter the bidirectional DC/DC converter is referred to as a DC converter or a DC/DC converter. High and low are relative. For example, since a voltage of the port PortA is higher than a voltage of the port PortB, it is described to be a high-voltage port, and since the voltage of the port PortB is lower than the voltage of the port PortA, it is described to be a low-voltage port. When the bidirectional DC/DC converter is applied to the energy storage system, the low-voltage port PortB is electrically connected to a battery unit (not shown), and the high-voltage port PortA is electrically connected to a DC bus (not shown).

In this embodiment, the voltage of the low-voltage port PortB is supplied by a DC source, and is corresponding to a first voltage Lv. When starting from the low-voltage port, the voltage of the high-voltage port PortA is an output voltage of the bidirectional DC/DC converter. The voltage of the high-voltage port PortA is increased from zero to a target voltage, and the target voltage corresponds to a second voltage Hv.

The start circuit A₁ has a first end electrically connected to the low-voltage port PortB and a second end electrically connected to a first end of the inductor L₁, and includes at least one controllable switch. When the bidirectional DC/DC converter starts from the low-voltage port, the start circuit A₁ is configured to establish the voltage of the high-voltage port through the voltage of the low-voltage port. The start circuit A₁ of the bidirectional DC/DC converter provided in this embodiment performs buck conversion on the voltage of the low-voltage port to stably establish the voltage of the high-voltage port to the first voltage Lv. The voltage of the high-voltage port will not be lowered by a mF-level capacitor and self-start devices on the DC bus. PWM modulation is performed to the at least one controllable switch in the start circuit A₁, such that the voltage of the high-voltage port is flexibly controllable during establishment from 0 to the first voltage Lv.

The switch circuit A₂ has a first end electrically connected to a second end of the inductor L₁, and a second end electrically connected to the high-voltage port PortA. After the voltage of the high-voltage port is stably established to the first voltage Lv, PWM modulation is performed on the switch circuit A₂ and the switch circuit A₂ performs boost conversion on the voltage of the low-voltage port to stably establish the voltage of the high-voltage port to the second voltage Hv. In actual application, the line has an impedance, and the diode also has a voltage drop, so "equal to", "stabilize", "approach", "substantially stabilize", "substantially equal to", "establish to", or the like in the disclosure allows an error, for example, +/- 10%, preferably, +/- 5%.

The voltage of the high-voltage port increases from zero to the first voltage Lv to form a voltage change curve. A slope of the voltage change curve is controlled by adjusting a duty ratio of the at least one controllable switch. For example, the duty ratio of the at least one controllable switch is adjusted by closed loop control. As compared to start through the precharge resistor, a voltage controllable range of the high-voltage port PortA is expanded by using the start circuit A₁, such that a theoretical control range of the voltage of the high-voltage port PortA is increased from [Lv, Hv] to [0, Hv]. The soft-start establishment of the voltage of the high-voltage port PortA can be realized from 0V to a target voltage. A voltage control dead zone of the high-voltage port PortA [0, Lv] is eliminated, and the voltage of the high-voltage port PortA is continuously controllable. The soft-start process of the high-voltage port PortA corresponds to gradually establishing the voltage of the high-voltage port PortA to the first voltage Lv by controlling a duty ratio of the at least one controllable switch to gradually increase. With respect to the control technique of the controllable switch, please refer to the existing voltage modulation technique, and the details are not described here.

When starting from the low-voltage port, working stages of the bidirectional DC/DC converter in this embodiment include a first working stage and a second working stage. At the first working stage, the start circuit A₁ and the inductor L₁ perform buck conversion on the first voltage Lv to obtain the voltage of the high-voltage port. That is to say the start circuit A₁ and the inductor L₁ serve as a power conversion circuit to convert the first voltage Lv and establish the voltage of the high-voltage port. And at the first working stage, the voltage of the high-voltage port can be gradually increased to the first voltage Lv. A duty ratio within the start circuit A₁ is gradually increased such that the voltage of the high-voltage port PortA can be slowly increased from 0V to avoid generating a surge impulse current. The duty ratio of the start circuit A₁ is closed-loop modulated to stabilize the voltage of the high-voltage port to a set value without fluctuation due to the mF-level capacitor and/or the self-start devices on the DC bus. When the voltage of the high-voltage port PortA is stably increased to the first voltage Lv, the second working stage is entered. The switch circuit A₂ and the inductor L₁ form a second power conversion circuit which performs boost conversion on the first voltage Lv to obtain the voltage of the high-voltage port, such that the voltage of the high-voltage port PortA is gradually increased from the first voltage Lv to the second voltage Hv.

When the bidirectional DC/DC converter starts from the low-voltage port PortB, PWM modulation is performed on the start circuit A₁ to establish the voltage of the high-voltage port PortA to a first target value (such as, the voltage Lv), and then PWM modulation is performed on the switch circuit A₂ to establish the voltage of the high-voltage port PortA to a second target value (such as, the voltage Hv). In the start process, the voltage of the high-voltage port PortA is controllable in a range [0, Hv], the time and the soft start way of establishing the voltage of the high-voltage port PortA are flexibly controllable. And coupling parameters such as a capacitor capacity of the DC bus, a bus mounting load and a precharge resistor R₂₁, and the like are decoupled.

At the first working stage, the switch circuit A₂ works in a constant conduction mode to provide current paths between the high-voltage port and the first power conversion circuit. The constant conduction mode can be understood that at the first working stage, the switch circuit A₂ always has at least one conducting branch, such that a current of the start circuit A₁ flows the at least one conducting branch into the high-voltage port. For example, a part or all switches in the conducting branch are turned on constantly.

At the second working stage, the start circuit A₁ works in the constant conduction mode to provide current paths between the low-voltage port and the second power conversion circuit. The constant conduction mode can be understood that at the second working stage, the start circuit A₁ always has at least one conducting branch, such that a current of the low-voltage port PortB flows the at least one conducting branch into the switch circuit A₂. For example, a part or all switches in the conducting branch are turned on constantly.

FIG. 1b is a structural diagram of the bidirectional DC/DC converter in the second embodiment of the disclosure. As compared to the bidirectional DC/DC converter of FIG. 1a, the bidirectional DC/DC converter of this embodiment further includes a first capacitor C₁. As shown in FIG. 1b, the first capacitor C₁ is electrically connected to the switch circuit A₂, and connected in parallel to the high-voltage port PortA. Since the first capacitor C₁ is added, a first precharge circuit shall be added to the high-voltage port. When starting from the high-voltage port, the first precharge circuit precharges the first capacitor C₁. The first precharge circuit includes a first precharge resistor R₁₁ and a first main switch K₁ and a first precharge switch K₁₁. The first main switch K₁ is connected between the high-voltage port PortA and the first capacitor C₁. The first precharge resistor R₁₁ and the first precharge switch K₁₁ are connected in series, and the first main switch K₁ is then connected in parallel with the series connection of the first precharge resistor R₁₁ and the first precharge switch K₁₁. When starting, the first main switch K₁ is disconnected, the first precharge switch K₁₁ is closed, and the first precharge resistor R₁₁ is connected to limit a current for precharging the first capacitor C₁.

FIG. 1c is a structural diagram of the bidirectional DC/DC converter in the third embodiment of the disclosure. As compared to the bidirectional DC/DC converter of FIG. 1b, the bidirectional DC/DC converter of this embodiment further includes a second capacitor C₃. As shown in FIG. 1c, the second capacitor C₃ is electrically connected to the start circuit A₁, and connected in parallel to the low-voltage port PortB. Similarly, since the second capacitor C₃ is added, a second precharge circuit shall be added to the low-voltage port PortB. When starting from the low-voltage port, the second precharge circuit precharges the second capacitor C₃. The second precharge circuit includes a second precharging resistor R₂₁ and a second main switch K₂ and a second precharge switch K₂₁. The second main switch K₂ is connected between the low-voltage port PortB and the second capacitor C₃. The second precharge resistor R₂₁ and the second precharge switch K₂₁ are connected in series, and the second main switch K₂ is then connected in parallel with the series connection of the second precharge resistor R₂₁ and the second precharge switch K₂₁. When starting from the low-voltage port, before the first working stage and the second working stage, working stages of the DC/DC converter in this embodiment further include a precharge stage. At the precharge stage, the second precharge switch K₂₁ is closed, the low-voltage port charges the second capacitor C₃ through the second precharging resistor R₂₁. When a voltage across the second capacitor C₃ is charged to the voltage of the low-voltage port Lv, the second precharge switch K₂₁ is disconnected, the second main switch K₂ is closed, and the first working stage is entered.

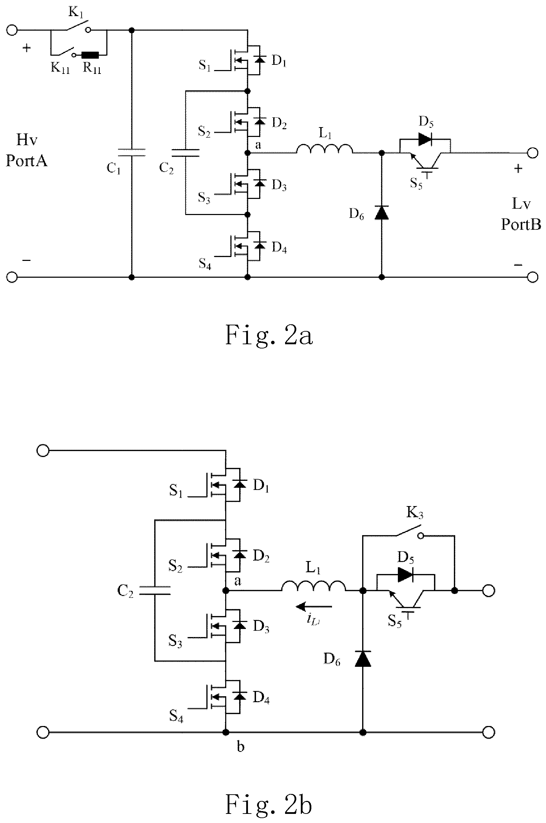

FIG. 2a shows a schematic circuit diagram of the bidirectional DC/DC converter in FIG. 1b. As shown in FIG. 2a, the start circuit A₁ and the inductor L₁ in this embodiment form a buck circuit. The start circuit A₁ includes a main switching tube S₅ and an auxiliary switching tube, and the main switching tube S₅ includes an antiparallel diode D₅. The auxiliary switching tube is a diode D₆, and can also be a controllable switch, such as, MOSFET or IGBT. A collector of the main switching tube S₅ is electrically connected to a positive end of the low-voltage port, an anode of the diode D₆ is electrically connected to a negative end of the low-voltage port, and an emitter of the main switching tube S₅ and a cathode of the diode D₆ are electrically connected to a first end of the inductor L₁.

Please continue to refer to FIG. 2a, the switch circuit A₂ and the inductor L₁ in this embodiment may form another power conversion circuit. The switch circuit A₂ of this embodiment is a flying capacitor three-level switch circuit, and includes a first switching tube S₁, a second switching tube S₂, a third switching tube S₃, a fourth switching tube S₄ and a first flying capacitor C₂. The first switching tube S₁, the second switching tube S₂, the third switching tube S₃ and the fourth switching tube S₄ are connected in series. The first flying capacitor C₂ has one end electrically connected between the first switching tube S₁ and the second switching tube S₂, and the other end electrically connected between the third switching tube S₃ and the fourth switching tube S₄. A drain electrode of the first switching tube S₁ is electrically connected to a positive end of the high-voltage port, and a source electrode of the fourth switching tube S₄ is electrically connected to a negative end of the high-voltage port. A second end of the inductor L₁ is connected to a connection point between the second switching tube S₂ and the third switching tube S₃.

At the first working stage, the PWM modulation is performed to control the main switching tube S₅, a duty ratio of the main switching tube S₅ is gradually increased, the buck circuit performs voltage conversion on the voltage Lv of the low-voltage port PortB, and an output of the buck circuit is gradually increased from 0 to the first voltage Lv. The switch circuit A₂ works in the constant conduction mode. Specifically, the second switching tube S₂ and the fourth switching tube S₄ are controlled to conduct constantly to form a conducting branch, and the start circuit A₁ charges the flying capacitor C₂ through the conducting branch. The second switching tube S₂ and the diode D₁ form another conducting branch, the start circuit A₁ charges the first capacitor C₁ through the conducting branch, the first main switch K₁ is closed, and the voltage of the high-voltage port PortA is gradually established. At the first working stage, the voltage of the high-voltage port PortA is established in the buck mode of the start circuit A₁. In the process, a PWM pulse signal of the main switching tube S₅ is modulated to realize the soft-start of the high-voltage port PortA, thereby avoiding impulse of the surge current.

At the second working stage, the main switching tube S₅ is controlled to conduct constantly. For example, a duty ratio of the main switching tube S₅ is equal to 1. At this time, the start circuit A₁ works in the constant conduction mode to provide a current path between the low-voltage port PortB and the second conversion circuit. At the second working stage, the PWM modulation is performed on the switching tubes S₁ to S₄ of the switch circuit A₂, the second conversion circuit performs voltage conversion on the voltage Lv of the low-voltage port PortB, and an output of the second conversion circuit charges the first capacitor C₁ and establish the voltage of the high-voltage port PortA. At the second working stage, the voltage of the high-voltage port PortA is established in the boost mode of the switch circuit A₂, and the voltage of the high-voltage port PortA is increased from the first voltage Lv to the second voltage Hv.

At the first working stage, when the start circuit A₁ and the inductor establish the voltage of the high-voltage port, the switch circuit A₂ is in the conducting state. In a topological structure of the switch circuit A₂, in order to avoid electronic components from being damaged, a voltage of the first flying capacitor C₂ shall be ensured not to exceed one half of the second voltage Hv. Therefore, when the first voltage Lv is greater than or equal to one half of the second voltage Hv, the first working stage further includes controlling the second switching tube S₂ and the fourth switching tube S₄ to be on constantly to charge the first flying capacitor C₂; and when the voltage of the first flying capacitor C₂ is equal to one half of the second voltage Hv, controlling the second switching tube S₂ and the fourth switching tube S₄ to be turned off. At this time, the switch circuit A₂ has a conducting branch formed of antiparallel diodes D₁ and D₂, and the start circuit A₁ continues to charge the first capacitor C₁ through the conducting branch to continue to establish the voltage of the high-voltage port PortA from 0.5Hv to Lv. Since the maximum voltage of the first flying capacitor C₂ is 0.5Hv, when Lv≥0.5Hv, at the first working stage, a path for charging the first flying capacitor C₂ shall be cut off when the voltage of the first flying capacitor C₂ reaches 0.5Hv.

When the first voltage Lv is less than one half of the second voltage Hv, the first working stage controls the second switching tube S₂ and the fourth switching tube S₄ to be conducted constantly to charge the first flying capacitor C₂. At this time, when the first working stage ends, the voltage of the first flying capacitor C₂ is the first voltage Lv, and less than 0.5Hv. So at the first working stage, the second switching tube S₂ and the fourth switching tube S₄ are not turned off in advance, and kept on to charge the first flying capacitor C₂.

FIG. 2b shows a schematic circuit diagram of the bidirectional DC/DC converter in FIG. 1a. As shown in FIG. 2b, the start circuit A₁ of this embodiment includes a main switching tube S₅, a short-circuit switch K₃ and an auxiliary switching tube, and the main switching tube S₅ includes an antiparallel diode D₅. The auxiliary switching tube is a diode D₆, and can also be a controllable switch, such as, MOSFET or IGBT. A collector of the main switching tube S₅ is electrically connected to a positive end of the low-voltage port, an anode of the diode D₆ is electrically connected to a negative end of the low-voltage port, and an emitter of the main switching tube S₅ and a cathode of the diode D₆ are electrically connected to a first end of the inductor L₁. The short-circuit switch K₃ is connected in parallel to the main switching tube S₅, i.e., both ends of the short-circuit switch K₃ are electrically connected to the emitter and the collector of the main switching tube S₅, respectively. At the first working stage, when the start circuit A₁ and the inductor establish the voltage of the high-voltage port, the short-circuit switch K₃ is off, and operations of the start circuit A₁ and the switch circuit A₂ are similar with that in the corresponding embodiment of FIG. 2a. The details are not described here. When the first working stage ends, or the voltage of the high-voltage port is established to the first voltage, or the start circuit A₁ is conducted constantly, the main switching tube S₅ is conducted constantly, and the short-circuit switch K₃ is closed. The short-circuit switch K₃ is turned on to share a current flowing the main switching tube S₅, thereby improving working efficiency of the bidirectional DC/DC converter. Meanwhile, the main switching tube S₅ can use a derating element.

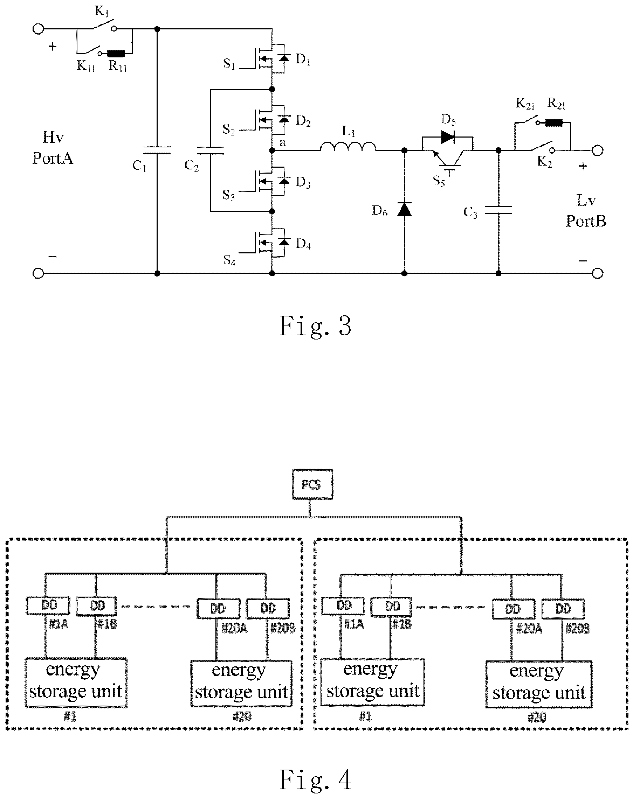

FIG. 3 shows a schematic circuit diagram of the bidirectional DC/DC converter in FIG. 1c. As shown in FIG. 3, the bidirectional DC/DC converter of this embodiment further includes a second capacitor C₃ electrically connected to the start circuit A₁, and connected in parallel to the low-voltage port PortB. A precharge circuit is provided between the low-voltage port PortB and the second capacitor C₃. When starting from the low-voltage port, the second precharge resistor R₂₁ precharges the second capacitor C₃. As compared to the bidirectional DC/DC converter of FIG. 2a, before the first working stage, it further includes a precharge stage. The first main switch K₁ is closed to connect the bidirectional DC/DC converter and the DC bus. And the first switching tube S₁ and the third switching tube S₃ of the switch circuit A₂ are on, while closing the second switching tube S₂ and the fourth switching tube S₄ for preparation of precharging the first flying capacitor C₂. The second precharge switch K₂₁ is closed to precharge the second capacitor C₃. At this time, a voltage of the second capacitor C₃ is increased. When precharging of the second capacitor C₃ ends, the second main switch K₂ is closed, and the second precharge switch K₂₁ is turned off. After the precharge stage ends, the first working stage is entered. And the pulse signal of the main switching tube S₅ of the start circuit is modulated in the closed-loop to establish voltages of the first capacitor C₁, the first flying capacitor C₂ and the high-voltage port.

If the first voltage Lv is less than one half of the second voltage Hv, the second switching tube S₂ and the fourth switching tube S₄ are turned off after the first flying capacitor C₂ is charged to the first voltage Lv. If the first voltage Lv is greater than or equal to one half of the second voltage Hv, the second switching tube S₂ and the fourth switching tube S₄ are turned off when the first flying capacitor C₂ is charged to 0.5Hv, and meanwhile, the voltage of the high-voltage port PortA continues to be charged to the first voltage Lv. After the first working stage ends, the second working stage is entered. And the main switching tube S₅ of the start circuit A₁ is turned on constantly, the first switching tube S₁, the second switching tube S₂, the third switching tube S₃ and the fourth switching tube S₄ of the switch circuit A₂ are modulated in the closed-loop. In the second working stage, the voltage of the high-voltage port PortA is controllably established to the second voltage Hv, while the voltage of the first flying capacitor C₂ is controlled to be 0.5Hv. And when the voltage of the high-voltage port PortA is equal to the second voltage Hv, the start of the bidirectional DC/DC converter is completed.

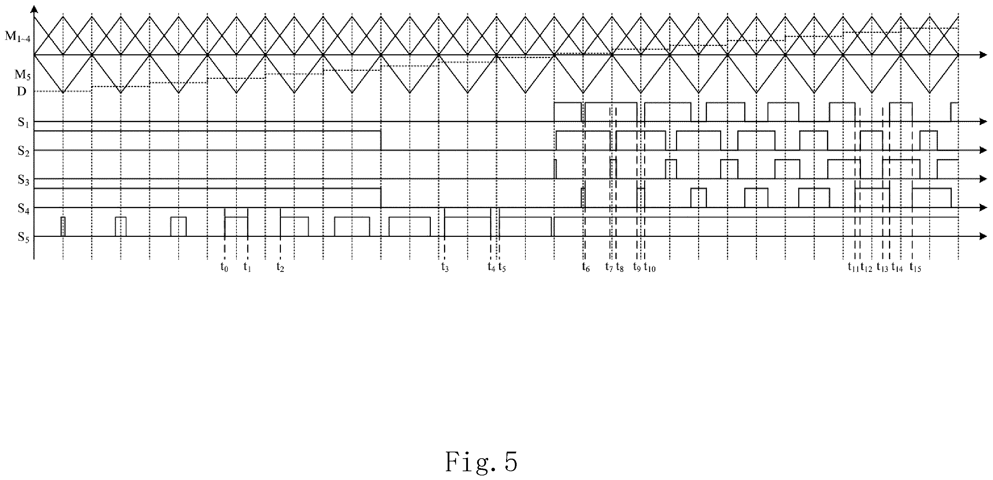

FIG. 5 is a schematic diagram of pulse signals of switching tubes in the bidirectional DC/DC converter of FIG. 3. FIG. 5 corresponds to working stages in the case that the first voltage Lv is greater than or equal to one half of the second voltage Hv. M₁~₄ are carrier waves of the switching tubes S₁ to S₄, M₅ is a carrier wave of the main switching tube S₅, S₁~S₄ are pulse signals of the switching tubes S₁ to S₄, and D is a modulation signal of the switching tubes S₁ to S₅. Please refer to FIG. 5, at the first working stage, a duty ratio of the main switching tube S₅ is gradually increased, and after entering into the second working stage, the main switching tube S₅ is conducted constantly. For example, the duty ratio of the main switching tube S₅ is substantially equal to 1.

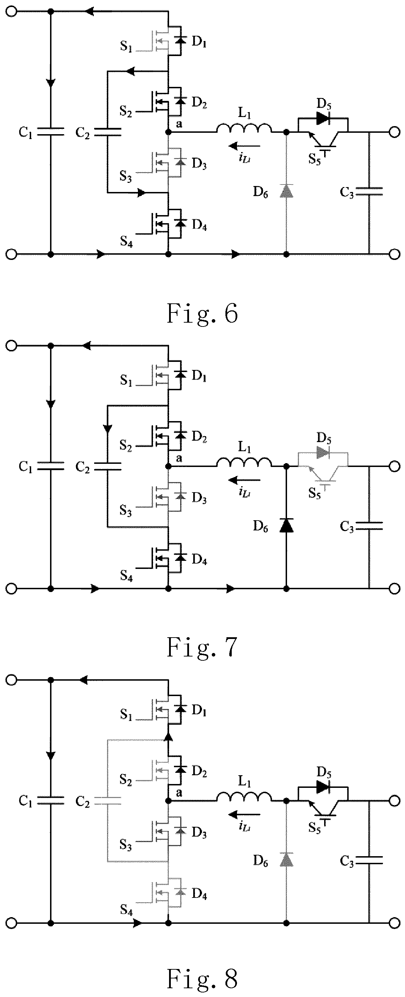

FIG. 6 shows current loops of the bidirectional DC/DC converter in FIG. 3 when the main switching tube S₅ is turned on. Please refer to FIGS. 5 and 6. During the time period t₀~t₁, the main switching tube S₅ is turned on, and the auxiliary switching tube D₆ is cut off. At this time, the power of the low-voltage port PortB charges the inductor L₁, and there are two current loops. In one current loop, the current flows through the low-voltage port, the main switching tube S₅, the inductor L₁, the switching tube S₂, the first flying capacitor C₂ and the fourth switching tube S₄, and back to the low-voltage port. In the other current loop, the current flows through the low-voltage port, the main switching tube S₅, the inductor L₁, the switching tube S₂, the antiparallel diode D₁ and the first capacitor C₁, and back to the low-voltage port. At the first working stage, the first capacitor C₁ and the first flying capacitor C₂ are in a charging state.

FIG. 7 shows current loops of the bidirectional DC/DC converter in FIG. 3 when the main switching tube S₅ is turned off. Please refer to FIGS. 5 and 7. During the time period t₁~t₂, the main switching tube S₅ is turned off, and the auxiliary switching tube D₆ is turned on. At this time, the inductor L₁ follows current, and there are two current loops. In one freewheel loop, the current flows through the inductor L₁, the switching tube S₂, the first flying capacitor C₂, the fourth switching tube S₄ and the auxiliary switching tube D₆. In the other freewheel loop, the current flows through the inductor L₁, the switching tube S₂, the antiparallel diode D₁, the first capacitor C₁ and the auxiliary switching tube D₆. At the first working stage, the first capacitor C₁ and the first flying capacitor C₂ are in the charging state.

FIG. 8 shows a current loop of the bidirectional DC/DC converter in FIG. 3 when the main switching tube S₅ is turned on. Please refer to FIGS. 5 and 8. During the time period t₃~t₄, the voltage of the first flying capacitor C₂ has been charged to one half of the second voltage Hv, so at this time, the second switching tube S₂ and the fourth switching tube S₄ are turned off, and the first flying capacitor C₂ is no longer charged. In this time period, the main switching tube S₅ is conducted, and the auxiliary switching tube D₆ is cut off. The power of the low-voltage port PortB charges the inductor L₁, and the current flows via the low-voltage port PortB, the main switching tube S₅, the inductor L₁, the antiparallel diode D₂, the antiparallel diode D₁ and the first capacitor C₁, and back to the low-voltage port PortB. At this time, only the first capacitor C₁ is in the charging state.

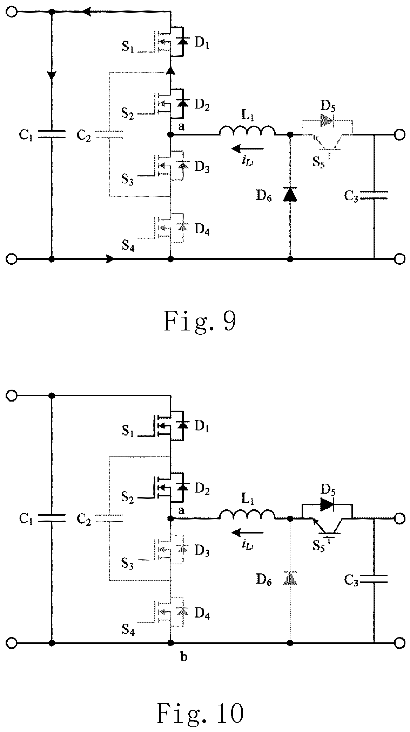

FIG. 9 shows a current loop of the bidirectional DC/DC converter in FIG. 3 when the main switching tube S₅ is off. Please refer to FIGS. 5 and 9. During the time period t₄~t₅, the voltage of the first flying capacitor C₂ has been charged to one half of the second voltage Hv, so at this time, the second switching tube S₂ and the fourth switching tube S₄ are turned off, and the first flying capacitor C₂ is no longer charged. In the time period, the main switching tube S₅ is turned off, and the auxiliary switching tube D₆ is turned on. The inductor L₁ freewheels, and the current flows through the inductor L₁, the antiparallel diode D₂, the antiparallel diode D₁, the first capacitor C₁ and the auxiliary switching tube D₆. At this time, only the first capacitor C₁ is in the charging state.

When the voltage of the high-voltage port is established to the first voltage Lv, the main switching tube S₅ is conducted constantly, and the auxiliary switching tube D₆ is off.

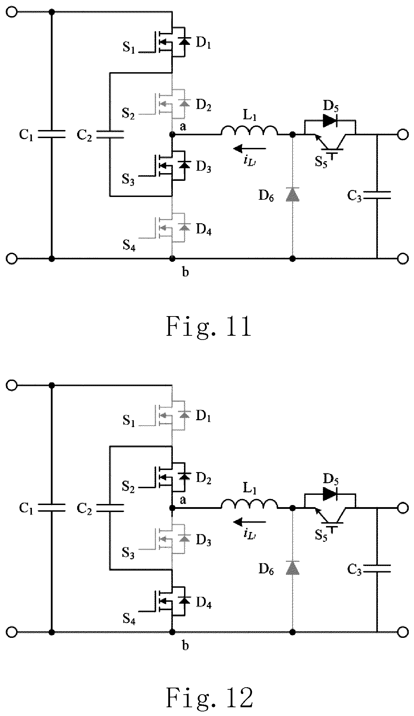

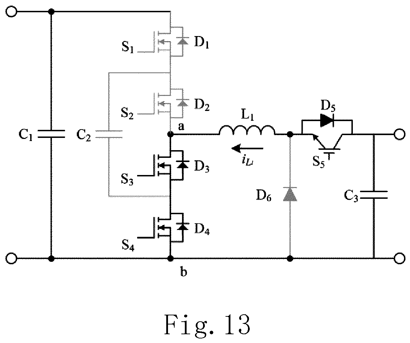

FIGS. 10 to 13 show working modes of the switch circuit A₂ of the bidirectional DC/DC converter in FIG. 3 at the second working stage. The working mode shown in FIG. 10 is a mode A, the working mode shown in FIG. 11 is a mode B, the working mode shown in FIG. 12 is a mode C, and the working mode shown in FIG. 13 is a mode D. When the first voltage Lv is greater than or equal to one half of the second voltage Hv, at the second working stage, the switch circuit A₂ operates in the mode A, the mode B and the mode C.

Please refer to FIGS. 5 and 10. During the time period t₆~t₇, the switch circuit A₂ operates in the mode A. The first switching tube S₁ and the second switching tube S₂ are conducted, the inductor L₁ releases energy, and the current flows through the inductor L₁, the first switching tube S₁, the second switching tube S₂ and the low-voltage port PortB. At this time, the first capacitor C₁ is in the charging state.

Please refer to FIGS. 5 and 11. During the time period t₇~t₈, the switch circuit A₂ operates in the mode B. The first switching tube S₁ and the third switching tube S₃ are conducted, the first flying capacitor C₂ discharges, the inductor L₁ releases energy, and the current flows through the inductor L₁, the third switching tube S₃, the first flying capacitor C₂, the first switching tube S₁, the first flying capacitor C₂ and the low-voltage port PortB. At this time, the first capacitor C₁ is in the charging state.

Please refer to FIGS. 5 and 10 again. During the time period t₈~t₉, the switch circuit A₂ also operates in the mode A. The first switching tube S₁ and the second switching tube S₂ are turned on again, the inductor L₁ releases energy, and the current flows through the inductor L₁, the first switching tube S₁, the second switching tube S₂ and the low-voltage port PortB. At this time, the first capacitor C₁ is in the charging state.

Please refer to FIGS. 5 and 12. During the time period t₉-t₁₀, the switch circuit A₂ also operates in the mode C. The second switching tube S₂ and the fourth switching tube S₄ are conducted, and the current flows through the inductor L₁, the second switching tube S₂, the first flying capacitor C₂, the fourth switching tube S₄ and the low-voltage port PortB to charge the inductor L₁ and the first flying capacitor C₂.

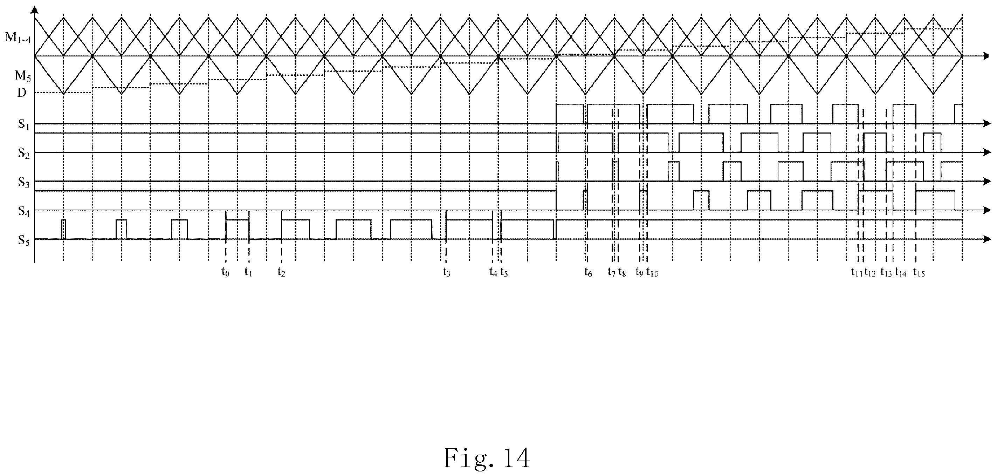

FIG. 14 is a schematic diagram of pulse signals of switching tubes in the bidirectional DC/DC converter of FIG. 3. FIG. 14 corresponds to working stages in the case that the first voltage Lv is less than one half of the second voltage Hv. Since the voltage of the first flying capacitor C₂ at the first working stage can be charged only to the first voltage Lv, which is less than one half of the second voltage Hv, at this time, an operation of turning off the second switching tube S₂ and the fourth switching tube S₄ does not exist at the first working stage. That is to say, the second switching tube S₂ and the fourth switching tube S₄ are on constantly at the first working stage.

When the first voltage Lv is less than one half of the second voltage Hv, at the second working stage, the switch circuit A₂ operates in the mode A, the mode B and the mode D.

Refer to FIGS. 14 and 13. During the time period t₁₁~t₁₂, the switch circuit A₂ operates in the mode D. The third switching tube S₃ and the fourth switching tube S₄ are conducted, and the current flows through the inductor L₁, the third switching tube S₃ and the fourth switching tube S₄. At this time, the power of the low-voltage port PortB charges the inductor L₁.

Please refer to FIGS. 14 and 12. During the time period t₁₂~t₁₃, the switch circuit A₂ operates in the mode C. The second switching tube S₂ and the fourth switching tube S₄ are conducted, and the current flows through the inductor L₁, the second switching tube S₂, the first flying capacitor C₂, the fourth switching tube S₄ and the low-voltage port PortB to charge the first flying capacitor C₂ and the inductor L₁.

Please refer to FIGS. 14 and 13. During the time period t₁₃~t₁₄, the switch circuit A₂ operates in the mode D. The third switching tube S₃ and the fourth switching tube S₄ are conducted, and the current flows through the inductor L₁, the third switching tube S₃ and the fourth switching tube S₄. At this time, the power of the low-voltage port PortB charges the inductor L₁.

Please refer to FIGS. 14 and 11. During the time period t₁₄~t₁₅, the switch circuit A₂ operates in the mode B. The first switching tube S₂ and the third switching tube S₃ are conducted, the current flows through the inductor L₁, the first switching tube S₁, the first flying capacitor C₂ and the third switching tube S₃. At this time, the inductor L₁ releases energy, and the first flying capacitor C₂ discharges. The first flying capacitor C₂, the inductor L₁ and the low-voltage port PortB charge the first capacitor C₁.

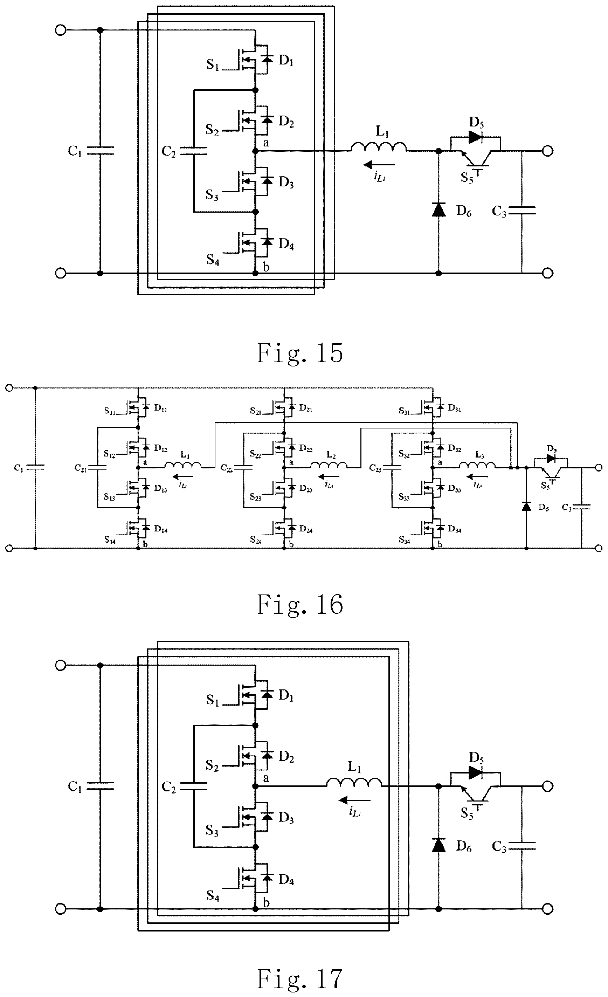

In some embodiments, the switch circuit A₂ of the bidirectional DC/DC converter in any embodiment of FIGS. 1a to 1c is a multi-phase interleaving topological structure. As shown in FIG. 15, the switch circuit A₂ includes multiple groups of switch bridge arms interleaved.

In some embodiments, the switch circuit A₂ and the inductor L₁ of the bidirectional DC/DC converter in any embodiment of FIGS. 1a to 1c are a multi-phase interleaving topological structure, as shown in FIGS. 16 to 17.

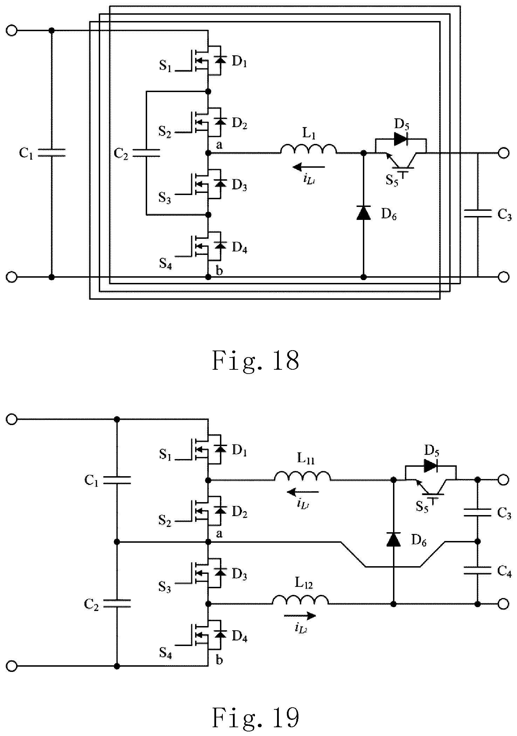

In some embodiments, the switch circuit A₂, the inductor L₁ and the start circuit A₁ of the bidirectional DC/DC converter in any embodiment of FIGS. 1a to 1c are a multi-phase interleaving topological structure, as shown in FIG. 18.

In some embodiments, the switch circuit A₂ and the inductors L₁₁, L₁₂ of the bidirectional DC/DC converter in any embodiment of FIGS. 1a to 1c are a cascaded topological structure, as shown in FIG. 19.

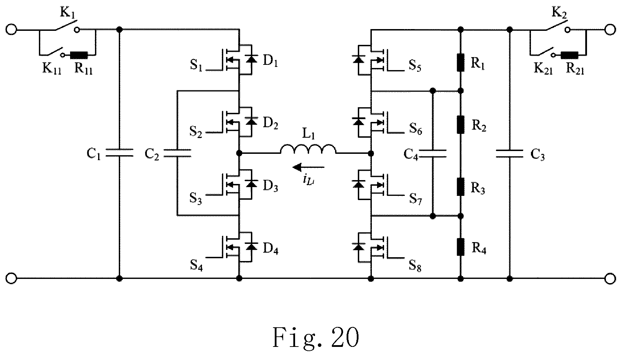

FIG. 20 shows another schematic circuit diagram of the bidirectional DC/DC converter in FIG. 1c. As compared to the bidirectional DC/DC converter of FIG. 3, the start circuit A₁ of the bidirectional DC/DC converter in this embodiment is a second flying capacitor switch circuit, and includes a fifth switching tube S₅, a sixth switching tube S₆, a seventh switching tube S₇, an eighth switching tube Ss, a first resistor R₁, a second resistor R₂, a third resistor R₃, a fourth resistor R₄ and a second flying capacitor C₄. The fifth switching tube S₅, the sixth switching tube S₆, the seventh switching tube S₇ and the eighth switching tube S₈ are sequentially connected in series. A drain electrode of the fifth switching tube S₅ is electrically connected to a first end of the low-voltage port PortB, and a source electrode of the eighth switching tube S₈ is electrically connected to a second end of the low-voltage port PortB. A source electrode of the sixth switching tube S₆ is electrically connected to the inductor L₁. The second flying capacitor C₄ is electrically connected in parallel between a drain electrode of the sixth switching tube S₆ and a source electrode of the seventh switching tube S₇. The first resistor R₁, the second resistor R₂, the third resistor R₃ and the fourth resistor R₄ are sequentially connected in series. The first resistor R₁ is connected in parallel to the fifth switching tube S₅, a first end of the second resistor R₂ and a second end of the third resistor R₃ are connected in parallel to the second flying capacitor C₄, and the fourth resistor R₄ is connected in parallel to the eighth switching tube S₈. The start circuit A₁ in FIG. 3 is a two-level topology, and the start circuit A₁ in this embodiment uses a three-level topological structure. Compared to the two-level topology, the start circuit A₁ with the three-level topological structure can reduce the voltage stress of the switching tubes. The resistors R₁ to R₄ are used to precharge the second flying capacitor C₄.

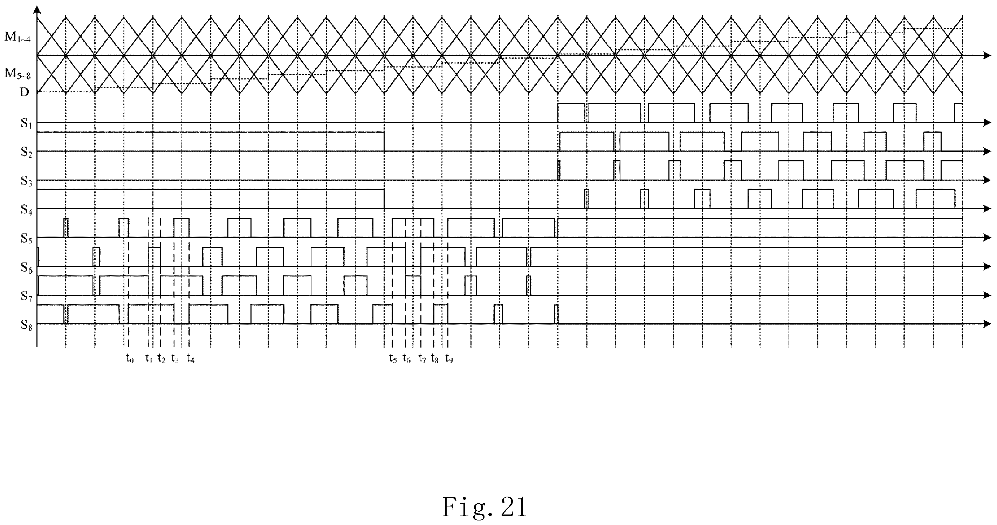

FIG. 21 is a schematic diagram of pulse signals of switching tubes in the bidirectional DC/DC converter of FIG. 20. FIG. 21 corresponds to working stages in the case that the first voltage Lv is greater than or equal to one half of the second voltage Hv. M₁~₄ are carrier waves of the switching tubes S₁ to S₄, M_{5~8} are carrier waves of the switching tubes S₅ to S₈, S₁~S₈ are pulse signals of the switching tubes S₁ to S₈, and D is a modulation signal of the switching tubes S₁ to S₈. Please refer to FIG. 21, at the first working stage, pulse widths of switching signals of the fifth switching tube S₅ and the sixth switching tube S₆ are controlled to gradually increase, and pulse widths of switching signals of the seventh switching tube S₇ and the eighth switching tube S₈ are controlled to gradually decrease. As a result, the voltage of the high-voltage port PortA is gradually established to the first voltage Lv. At the second working stage, the fifth switching tube S₅ and the sixth switching tube S₆ are controlled to conduct constantly, and the seventh switching tube S₇ and the eighth switching tube S₈ are controlled to be off.

As shown in FIG. 21, the first working stage of the bidirectional DC/DC converter in FIG. 20 includes time periods t₀~t₄, and the operations of the start circuit A₁ and the corresponding current loops are explained combining with the time periods t₀~t₄.

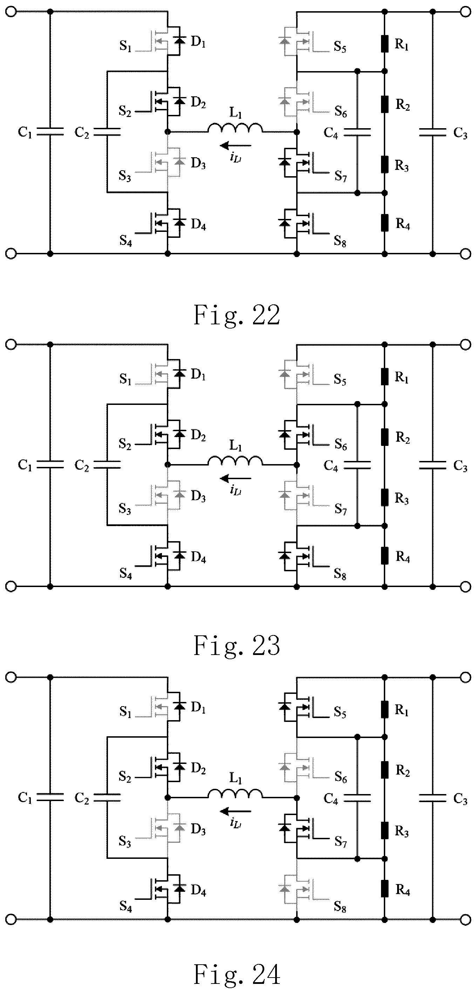

Please refer to FIGS. 21 and 22. During the time period t₀~t₁, the seventh switching tube S₇ and the eighth switching tube S₈ are conducted, and the second switching tube S₂ and the fourth switching tube S₄ are conducted. The inductor L₁ freewheels, and there are two current loops. In one current loop, the current flows through the second switching tube S₂, the first flying capacitor C₂, the fourth switching tube S₄, the seventh switching tube S₇ and the eighth switching tube S₈ to charge the first flying capacitor C₂. In the other current loop, the current flows through the second switching tube S₂, the antiparallel diode D₁, the first capacitor C₁, the seventh switching tube S₇ and the eighth switching tube S₈ to charge the first capacitor C₁.

Please refer to FIGS. 21 and 23. During the time period t₁~t₂, the sixth switching tube S₆ and the eighth switching tube S₈ are conducted, the second flying capacitor C₄ discharges, and the inductor L₁ freewheels. There are two current loops. In one current loop, the current flows through the sixth switching tube S₆, the inductor L₁, the second switching tube S₂, the first flying capacitor C₂, the fourth switching tube S₄ and the eight switching tube S₈ and the second flying capacitor C₄ to charge the first flying capacitor C₂. In the other current loop, the current flows through the sixth switching tube S₆, the inductor L₁, the second switching tube S₂, the antiparallel diode D₁, the first capacitor C₁ and the eighth switching tube S₈ and the second flying capacitor C₄ to charge the first capacitor C₁.

Please refer to FIGS. 21 and 22. During the time period t₂~t₃, the seventh switching tube S₇ and the eighth switching tube S₈ are conducted, and the inductor L₁ freewheels to charge the first capacitor C₁ and the first flying capacitor C₂.

Please refer to FIGS. 21 and 24. During the time period t₃~t₄, the fifth switching tube S₈ and the seventh switching tube S₇ are conducted, and the low-voltage port PortB charges the second flying capacitor C₄. There are two current loops. In one current loop, the current flows through the low-voltage port, the fifth switching tube S₅, the second flying capacitor C₄, the seventh switching tube S₇, the inductor L₁, the second switching tube S₂, the first flying capacitor C₂ and the fourth switching tube S₄, and back to the low-voltage port. As a result, the second flying capacitor C₄ and the first flying capacitor C₂ are charged. In the other current loop, the current flows through the low-voltage port, the fifth switching tube S₅, the second flying capacitor C₄, the seventh switching tube S₇, the inductor L₁, the second switching tube S₂, the antiparallel diode D₁ and the first capacitor C₁, and flows back to the low-voltage port. As a result, the first capacitor C₁ are charged.

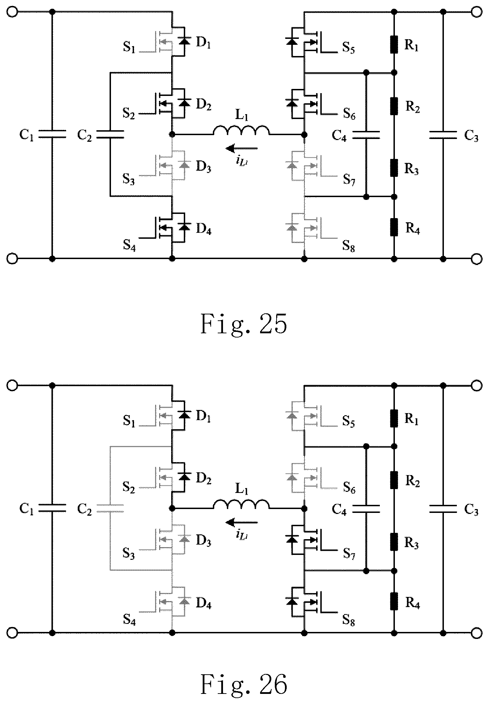

Please refer to FIGS. 21 and 25. The fifth switching tube S₅ and the sixth switching tube S₆ are turned on, and the seventh switching tube S₇ and the eighth switching tube S₈ are turned off. There are two current loops. In one current loop, the current flows through the low-voltage port, the fifth switching tube S₅, the sixth switching tube S₆, the inductor L₁, the second switching tube S₂, the first flying capacitor C₂ and the fourth switching tube S₄, and flows back to the low-voltage port. As a result, the first flying capacitor C₂ are charged. In the other current loop, the current flows through the low-voltage port, the fifth switching tube S₅, the sixth switching tube S₆, the inductor L₁, the second switching tube S₂, the antiparallel diode D₁ and the first capacitor C₁, and flows back to the low-voltage port. As a result, the first capacitor C₁ are charged.

Since the first voltage Lv is greater than or equal to one half of the second voltage Hv, the second switching tube S₂ and the fourth switching tube S₄ are turned off when the voltage of the first flying capacitor C₂ is charged to one half of the second voltage Hv. And, operations and corresponding current loops of the start circuit A₁ will change. Therefore, the first working stage of the bidirectional DC/DC converter in FIG. 20 further includes the time period t₅~t₉. Combining with the time period t₅~t₉, operations and corresponding current loops of the start circuit A₁ are explained when the voltage of the first flying capacitor C₂ is charged to 0.5Hv.

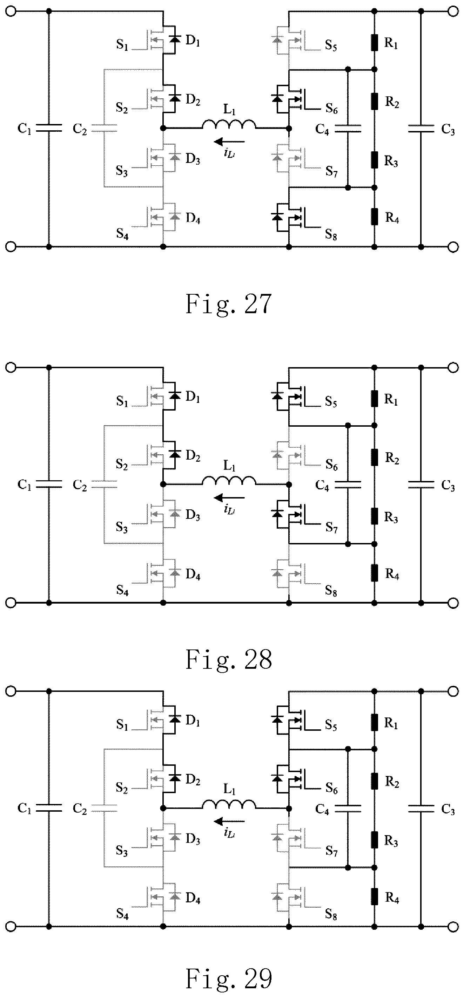

Please refer to FIGS. 21 and 29. During the time period t₅~t₆, the fifth switching tube S₅ and the sixth switching tube S₆ are conducted, and the current of the low-voltage port flows through the fifth switching tube S₅, the sixth switching tube S₆, the inductor L₁, the antiparallel diode D₂, the antiparallel diode D₁ and the first capacitor C₁ to continue charging the first capacitor C₁.

Please refer to FIGS. 21 and 28. During the time period t₆~t₇, the fifth switching tube S₅ and the seventh switching tube S₇ are conducted, and the current of the low-voltage port flows through the fifth switching tube S5, the second flying capacitor C₄, the seventh switching tube S₇, the inductor L₁, the antiparallel diode D₂, the antiparallel diode D₁ and the first capacitor C₁ to charge the second flying capacitor C₄ and the first capacitor C₁.

Please refer to FIGS. 21 and 29. During the time period t₇~t₈, the fifth switching tube S₅ and the sixth switching tube S₆ are conducted, and the current of the low-voltage port flows through the fifth switching tube S₅, the sixth switching tube S₆, the inductor L₁, the antiparallel diode D₁, the antiparallel diode D₂ and the first capacitor C₁ to continue charging the first capacitor C₁.

Please refer to FIGS. 21 and 27. During the time period t₈~t₉, the sixth switching tube S₆ and the eighth switching tube S₈ are conducted, the second flying capacitor C₄ discharges, and the current flows through the sixth switching tube S₆, the inductor L₁, the antiparallel diode D₂, the antiparallel diode D₁, the first capacitor C₁ and the eighth switching tube S₈ to continue charging the first capacitor C₁.

The invention further provides an energy storage device. The energy storage device includes a power condition system (PCS), a DC bus and multiple energy storage units. The DC bus is electrically connected to a DC side of the power condition system. Each of the multiple energy storage units is electrically connected to the DC bus through a bidirectional DC/DC converter, and at least one bidirectional DC/DC converter (such as, #1A and #20A) includes the low-voltage port, the high-voltage port, the start circuit, the inductor and the switch circuit. The energy storage units supply the first voltage to the corresponding low-voltage port of the DC/DC converter, the high-voltage port is electrically connected to the DC bus, and a target voltage of the high-voltage port is the second voltage. Further, the second voltage is equal to a voltage reference of the DC bus. One end of the start circuit is electrically connected to the low-voltage port, the start circuit includes at least one controllable switch, and one end of the inductor is electrically connected to the other end of the start circuit. Both ends of the switch circuit are electrically connected to the high-voltage port and the other end of the inductor, respectively. When starting from the low-voltage port, the at least one controllable switch is modulated, thereby using the first voltage to establish a voltage of the high-voltage port.

The energy storage device is electrically connected to a power supply system, such as, a grid. When the power supply system loses power, the energy storage units output energy to the at least one bidirectional DC/DC converter (such as, #1A and #20A) to establish a bus voltage through the at least one bidirectional DC/DC converter, thereby achieving the black start of the power condition system.

FIG. 4 shows a block diagram of the energy storage device. A DC side of the power control system (PCS) is electrically connected to the DC bus, the DC bus is electrically connected to high-voltage ports of the several bidirectional DC/DC converters (i.e., DD units 1A, 1B,...), and low-voltage ports of the bidirectional DC/DC converters are electrically connected to the corresponding energy storage units. When the energy storage device receives a black start command, it is unnecessary for DC devices mounted on the DC bus to make special switching, and the bidirectional DC/DC converter directly performs black start operation to establish a DC bus voltage in soft-start. In actual application, only add the start circuit A₁ in several groups of bidirectional DC/DC converters. The bidirectional DC/DC converters with the start circuit own black start capability, and can establish the bus voltage. After the DC bus voltage is established, the remaining modules are connected to the grid to start, and it is unnecessary that all bidirectional DC/DC converters are configured with the start circuit A₁, thereby reducing cost.

In some embodiments of the bidirectional DC/DC converter, the duty ratio of the at least one controllable switch in the start circuit is controlled through a closed loop method, thereby controlling the voltage of the high-voltage port to increase from zero to the first voltage Lv. A curve associated with the voltage change of the high-voltage port has a slope, and the slope is controlled based on the duty ratio of the at least one controllable switch. The process of establishing the voltage of the high-voltage port via the low-voltage port is flexibly controllable by modulating the duty ratio of the controllable switch of the start circuit.

When the bidirectional DC/DC converter starts from the low-voltage port, the start circuit performs buck conversion on the first voltage and establishes the voltage of the high-voltage port to the first voltage, and the switch circuit performs boost conversion on the first voltage and establishes the voltage of the high-voltage port from the first voltage to the second voltage. The second voltage is a target voltage of the DC bus.

When the start circuit performs buck conversion, the switch circuit works in a constant conduction mode to provide current paths between the high-voltage port and the start circuit. When the switch circuit performs boost conversion, the start circuit works in the constant conduction mode to provide current paths between the low-voltage port and the switch circuit.

The bidirectional DC/DC converter of the energy storage device has black start capability, and may establish the DC bus voltage without relying on other devices, thereby simplifying start flows of the energy storage system. Meanwhile, the bidirectional DC/DC converter has the capability of controlling the bus voltage when starting, so the devices connected to the DC bus have stronger adaptability. For example, a capacitive load with a large capacitance and a self-start load may be directly connected to the DC bus, and these loads can't cause start fail. The bidirectional DC/DC converter may control a voltage soft start slope and time, and the precharge circuit in the bidirectional DC/DC converter can be decoupled with the devices connected to the DC bus, thereby reducing the DC contactor, lowering the requirement for the precharge resistor, and reducing cost of the system.

The invention further provides a method of controlling a bidirectional DC/DC converter. The bidirectional DC/DC converter includes a low-voltage port, a high-voltage port, a start circuit and a switch circuit. The low-voltage port has a first voltage, and a target voltage of the high-voltage port is a second voltage. The start circuit has one end electrically connected to the low-voltage port. The inductor has one end electrically connected to the other end of the start circuit. The switch circuit has both ends electrically connected to the high-voltage port and the other end of the inductor, respectively.

When the bidirectional DC/DC converter starts from the low-voltage port, the control method includes: performing buck conversion on the first voltage through the start circuit to establish the voltage of the high-voltage port to the first voltage; and performing boost conversion on the first voltage through the switch circuit to establish the voltage of the high-voltage port from the first voltage to the second voltage. As for the control method and the achieved technical effect of the bidirectional DC/DC converter in this embodiment, reference may be made to the description of the corresponding parts of the bidirectional DC/DC converter in the above embodiments, and the details are not described here.

The bidirectional DC/DC converter of the invention has a self-start capability, and a flexibly controllable voltage soft start way. When the bidirectional DC/DC converter of the invention is configured in the energy storage system, coupling parameters such as capacitor capacity of the DC bus, bus mounting loads, precharge resistors, and the like may be decoupled to optimize system hardware topology.

Of course, the invention may further have various other embodiments, and without departing from spirit and essence of the invention, those skilled in the art shall make various corresponding modifications and variations according to the invention, but these corresponding modifications and variations shall belong to the protection scope of the appended claims of the invention.

## Claims

1. A bidirectional DC/DC converter, **characterized in that**, comprising:
a low-voltage port (PortB) having a first voltage;
a high-voltage port (PortA);
a start circuit (A₁) having one end electrically connected to the low-voltage port (PortB), wherein the start circuit (A₁) comprises at least one controllable switch;
an inductor (L₁) having one end electrically connected to the other end of the start circuit (A₁); and
a switch circuit (A₂) having both ends electrically connected to the high-voltage port (PortA) and the other end of the inductor (L₁), respectively;
wherein when the bidirectional DC/DC converter starts from the low-voltage port (PortB), a voltage of the high-voltage port (PortA) is established using the first voltage, by controlling the at least one controllable switch.

2. The bidirectional DC/DC converter according to claim 1, further comprising a first capacitor (C₁) connected in parallel to the high-voltage port (PortA), and a second capacitor (C₂) connected in parallel to the low-voltage port (PortB), wherein the start circuit (A₁) is electrically connected between the first capacitor (C₁) and the inductor (L₁).

3. The bidirectional DC/DC converter according to claim 1, wherein,
when the bidirectional DC/DC converter starts from the low-voltage port (PortB), the voltage of the high-voltage port (PortA) increases from zero to the first voltage, and a slope of voltage change is controlled based on a duty ratio of the at least one controllable switch.

4. The bidirectional DC/DC converter according to claim 3, wherein,
the duty ratio of the at least one controllable switch is controlled to gradually increase, thereby gradually increasing the voltage of the high-voltage port (PortA) to the first voltage.

5. The bidirectional DC/DC converter according to claim 1, wherein when the bidirectional DC/DC converter starts from the low-voltage port (PortB), the bidirectional DC/DC converter enters a first working stage;
wherein at the first working stage, the start circuit (A₁) and the inductor (L₁) perform buck conversion on the first voltage to obtain the voltage of the high-voltage port (PortA); and
the switch circuit (A₂) works in a constant conduction mode to provide current paths between the high-voltage port (PortA) and the power conversion circuit;
wherein at the first working stage, the voltage of the high-voltage port (PortA) is increased from zero to the first voltage.

6. The bidirectional DC/DC converter according to claim 5, wherein the bidirectional DC/DC converter enters a second working stage when the first working stage ends;
wherein at the second working stage, the switch circuit (A₂) and the inductor (L₁) perform boost conversion on the first voltage to obtain the voltage of the high-voltage port (PortA); and
the start circuit (A₁) works in the constant conduction mode to provide current paths between the low-voltage port (PortB) and the second power conversion circuit;
wherein at the second working stage, the voltage of the high-voltage port (PortA) is increased from the first voltage to a target voltage.

7. The bidirectional DC/DC converter according to claim 5, wherein,
the start circuit (A₁) comprises a main switching tube (S₅) electrically connected between a first end of the low-voltage port (PortB) and the inductor (L₁), and an auxiliary switching tube (D₆) having one end electrically connected to a connection point of the main switching tube (S₅) and the inductor (L₁), and the other end electrically connected to a second end of the low-voltage port (PortB);
wherein at the first working stage, a duty ratio of the main switching tube (S₅) is controlled to gradually increase, and the voltage of the high-voltage port (PortA) is gradually established to the first voltage; and
at the second working stage, the main switching tube (S₅) is controlled to conduct constantly.

8. The bidirectional DC/DC converter according to claim 7, wherein,
the start circuit (A₁) further comprises a short-circuit switch (K₃) electrically connected in parallel to the main switching tube (S₅), wherein when the main switching tube (S₅) is conducted constantly, the short-circuit switch (K₃) is closed.

9. The bidirectional DC/DC converter according to any one of claims 5-8, wherein the switch circuit (A₂) is a first flying capacitor switch circuit (A₂), and comprises a first switching tube (S₁), a second switching tube (S₂), a third switching tube (S₃), a fourth switching tube (S₄), and a first flying capacitor (C₂), the first switching tube (S₁), the second switching tube (S₂), the third switching tube (S₃) and the fourth switching tube (S₄) are connected in series, the first flying capacitor (C₂) has one end electrically connected between the first switching tube (S₁) and the second switching tube (S₂), and the other end electrically connected between the third switching tube (S₃) and the fourth switching tube (S₄), and a first end of the first switching tube (S₁) and a second end of the fourth switching tube (S₄) are connected in parallel to the high-voltage port (PortA).

10. The bidirectional DC/DC converter according to claim 9, wherein the first voltage is greater than or equal to one half of the target voltage; and
at the first working stage, the second switching tube (S₂) and the fourth switching tube (S₄) are conducted to charge the first flying capacitor (C₂), and the second switching tube (S₂) and the fourth switching tube (S₄) are turned off when a voltage of the first flying capacitor (C₂) is equal to one half of the target voltage.

11. The bidirectional DC/DC converter according to claim 9, wherein the first voltage is less than one half of the target voltage; and
at the first working stage, the second switching tube (S₂) and the fourth switching tube (S₄) are conducted constantly to charge the first flying capacitor (C₂).

12. The bidirectional DC/DC converter according to any one of claims 5-6, wherein the start circuit (A₁) is a second flying capacitor switch circuit (A₂), and comprises a fifth switching tube (S₅), a sixth switching tube (S₆), a seventh switching tube (S₇), an eighth switching tube (S₈), a first resistor (R₁), a second resistor (R₂), a third resistor (R₃), a fourth resistor (R₄) and a second flying capacitor (C₄);
wherein the fifth switching tube (S₅), the sixth switching tube (S₆), the seventh switching tube (S₇) and the eighth switching tube (S₈) are sequentially connected in series; a first end of the fifth switching tube (S₅) is electrically connected to a first end of the low-voltage port (PortB), and a second end of the eighth switching tube (S₈) is electrically connected to a second end of the low-voltage port (PortB); a second end of the sixth switching tube (S₆) is electrically connected to the inductor (L₁); the second flying capacitor (C₄) is electrically connected between a first end of the sixth switching tube (S₆) and a second end of the seventh switching tube (S₇); the first resistor (R₁), the second resistor (R₂), the third resistor (R₃) and the fourth resistor (R₄) are sequentially connected in series, the first resistor (R₁) is connected in parallel to the fifth switching tube (S₅), a first end of the second resistor (R₂) and a second end of the third resistor (R₃) are connected in parallel to the second flying capacitor (C₄), and the fourth resistor (R₄) is connected in parallel to the eighth switching tube (S₈).

13. The bidirectional DC/DC converter according to claim 12, wherein,
at the first working stage, pulse widths of switching signals of the fifth switching tube (S₅) and the sixth switching tube (S₆) are controlled to gradually increase, and pulse widths of switching signals of the seventh switching tube (S₇) and the eighth switching tube (S₈) are controlled to gradually decrease; and
at the second working stage, the fifth switching tube (S₅) and the sixth switching tube (S₆) are conducted constantly, and the seventh switching tube (S₇) and the eighth switching (S₈) tube are off.

14. An energy storage device, **characterized in that**, comprising: a power condition system (PCS); a DC bus electrically connected to a DC side of the power condition system (PCS); multiple energy storage units (#1······ #20), each electrically connected to the DC bus through a bidirectional DC/DC converter (DD), wherein at least one bidirectional DC/DC converter (DD) comprises:
a low-voltage port (PortB) having a first voltage supplied by a corresponding energy storage unit (#1 ······ #20);
a high-voltage port (PortA) electrically connected to the DC bus;
a start circuit (A₁) having one end electrically connected to the low-voltage port (PortB), wherein the start circuit (A₁) comprises at least one controllable switch;
an inductor (L₁) having one end electrically connected to the other end of the start circuit (A₁); and
a switch circuit (A₂) having both ends electrically connected to the high-voltage port (PortA) and the other end of the inductor (L₁), respectively;
wherein when the at least one bidirectional DC/DC converter (DD) starts from the low-voltage port (PortB), a voltage of the high-voltage port (PortA) is established using the first voltage, by controlling the at least one controllable switch.

15. The energy storage device according to claim 14, wherein the energy storage device is electrically connected to a power supply system, and when the power supply system loses power, the energy storage units (#1······ #20) output power to the at least one bidirectional DC/DC converter (DD) and establish a bus voltage through the at least one bidirectional DC/DC converter (DD).

16. The energy storage device according to any one of claims 14-15, wherein when the at least one bidirectional DC/DC converter (DD) starts from the low-voltage port (PortB), the voltage of the high-voltage port (PortA) increases from zero to the first voltage, and a slope of voltage change is controlled based on a duty ratio of the at least one controllable switch.

17. The energy storage device according to any one of claims 14-16, wherein when the at least one bidirectional DC/DC converter (DD) starts from the low-voltage port (PortB), the start circuit (A₁) and the inductor (L₁) perform buck conversion on the first voltage and establish the voltage of the high-voltage port (PortA) to the first voltage; and the switch circuit (A₂) and the inductor (L₁) perform boost conversion on the first voltage and establish the voltage of the high-voltage port (PortA) from the first voltage to the second voltage;
wherein when the start circuit (A₁) and the inductor (L₁) perform buck conversion, the switch circuit (A₂) works in a constant conduction mode to provide current paths between the high-voltage port (PortA) and the start circuit (A₁); and
wherein when the switch circuit (A₂) and the inductor (L₁) performs boost conversion, the start circuit (A₁) works in the constant conduction mode to provide current paths between the low-voltage port (PortB) and the switch circuit (A₂).

18. A method of controlling a bidirectional DC/DC converter, **characterized in that**, the bidirectional DC/DC converter comprises: a low-voltage port (PortB) having a first voltage; a high-voltage port (PortA); a start circuit (A₁) having one end electrically connected to the low-voltage port (PortB); an inductor (L₁) having one end electrically connected to the other end of the start circuit (A₁); and a switch circuit (A₂) having both ends electrically connected to the high-voltage port (PortA) and the other end of the inductor (L₁), respectively; wherein when the bidirectional DC/DC converter starts from the low-voltage port (PortB), the control method comprises:
performing buck conversion on the first voltage through the start circuit (A₁) and the inductor (L₁) to establish the voltage of the high-voltage port (PortA) to the first voltage; and
performing boost conversion on the first voltage through the switch circuit (A₂) and the inductor (L₁) to establish the voltage of the high-voltage port (PortA) from the first voltage to a target voltage.
